# EUROPEAN PATENT SPECIFICATION

(11) **EP 3 110 903 B1**
(45) Date of publication and mention of the grant of the patent: **22.07.2020**
(21) Application number: 15755951.9
(22) Date of filing: 29.01.2015
(51) Int. Cl.: C09K 8/03, C09K 8/04

(54) **AQUEOUS SOLUTION AND METHODS FOR MANUFACTURE AND USE**
WÄSSRIGE LÖSUNG UND VERFAHREN ZUR HERSTELLUNG UND VERWENDUNG
SOLUTION AQUEUSE ET PROCÉDÉS DE FABRICATION ET D'UTILISATION ASSOCIÉS

(30) Priority: 25.02.2014 US 201414189714
(43) Date of publication of application: 04.01.2017
(73) Proprietor: Schlumberger Technology B.V., 2514 JG The Hague (NL); Services Pétroliers Schlumberger, 75007 Paris (FR)
(72) Inventor: JIANG, Li, Katy, Texas 77494 (US); AYALA, Salvador, Houston, Texas 77041 (US); LECERF, Bruno, Houston, Texas 77035 (US); HUTCHINS, Richard, Sugar Land, Texas 77479 (US); JONES, Timothy G.J., Cambridge Cambridgeshire CB3 0EL (GB); ZIAUDDIN, Murtaza, Katy, Texas 77494 (US); KRAEMER, Chad, Katy, Texas 77494 (US); HE, Jian, Sugar Land, Texas 77479 (US)
(74) Representative: Schlumberger Intellectual Property Department
(86) International application number: PCT/US2015/013395
(87) International publication number: WO 2015/130424

(56) References cited:
- EP-A1- 2 832 815
- WO-A1-2015/069435
- US-A- 4 461 351
- US-A- 4 466 893
- US-A1- 2006 063 689
- US-B1- 6 273 191
- US-B1- 8 580 047

## Description

### RELATED APPLICATION DATA

None.

### BACKGROUND

The statements in this section merely provide background information related to the present disclosure and may not constitute prior art.

The technical field generally, but not exclusively, relates to high-concentration hydrochloric acid (HCI) solutions with urea, and uses thereof. Previously known solutions of HCI with urea, for example as described in U.S. Patent 4,466,893, utilize urea with low HCI concentrations (at or below 15%) and in the presence of various plant-based polysaccharide gums. HCI above 15% was determined to be deleterious to the properties of previously available solutions. US8580047 describes a composition including HCI, urea, complex substituted keto-amine-hydrochloride, an alcohol, an ethoxylate, and a ketone for performing hydraulic fracturing or oil or gas wells, solubilizing calcium carbonate, or lowering salt and bicarbonate levels in irrigation systems.

Stimulation of hydrocarbon bearing formations, hydraulic fracturing in particular, may require large quantities of water. Water is the primary component of most hydraulic fracturing fluids, and may come from a variety of sources, including surface water bodies, municipal installations, groundwater, wastewater or recycled water. Water is scarce in some geographic areas, and water usage by the petroleum industry may disrupt the supply of water to other industrial, agricultural and municipal entities. Water transportation to a wellsite and disposal following a fracturing treatment are also important issues facing well operators.

More than one million wells have undergone hydraulic fracturing in the United States since the inception of the technique during the late 1940s. At present, fracturing treatments are performed on over 35,000 wells annually. As production from conventional hydrocarbon fields continues to decline and the shift to non-conventional resources accelerates, the number of wells requiring fracturing treatments will increase.

Fracturing treatments typically consume between 2 and 7 million gallons US (7570 and 26,500 m³) of water per well.

### SUMMARY

This disclosure presents compositions and methods by which water consumption associated with well stimulation operations may be reduced.

The present invention resides in a composition as defined in claims 1 to 6, a method for preparing the composition as defined in claims 7 to 10, a method for treating a formation having a fracturing pressure in a subterranean well having a borehole as defined in claims 11 to 12 and a method for reducing water volume in a treatment fluid for use in a subterranean well as defined in claim 13.

This summary is provided to introduce a selection of concepts that are further described below in the illustrative embodiments. This summary is not intended to identify key or essential features of the claimed subject matter, nor is it intended to be used as an aid in limiting the scope of the claimed subject matter. Further embodiments, forms, objects, features, advantages, aspects, and benefits shall become apparent from the following description and drawings.

### DETAILED DESCRIPTION OF SOME ILLUSTRATIVE EMBODIMENTS

For the purposes of promoting an understanding of the principles of the disclosure, reference will now be made to the embodiments illustrated herein, and specific language will be used to describe the same. It will nevertheless be understood that no limitation of the scope of the claimed subject matter is thereby intended, any alterations and further modifications in the illustrated embodiments, and any further applications of the principles of the application as illustrated therein as would normally occur to one skilled in the art to which the disclosure relates are contemplated herein.

At the outset, it should be noted that in the development of any such actual embodiment, numerous implementation-specific decisions must be made to achieve the developer's specific goals, such as compliance with system related and business related constraints, which will vary from one implementation to another. Moreover, it will be appreciated that such a development effort might be complex and time consuming but would nevertheless be a routine undertaking for those of ordinary skill in the art having the benefit of this disclosure. In addition, the compositions used/disclosed herein can also comprise some components other than those cited. In the summary and this detailed description, each numerical value should be read once as modified by the term "about" (unless already expressly so modified), and then read again as not so modified unless otherwise indicated in context. Also, in the summary and this detailed description, it should be understood that a concentration range listed or described as being useful, suitable, or the like, is intended that any and every concentration within the range, including the end points, is to be considered as having been stated. For example, "a range of from 1 to 10" is to be read as indicating each and every possible number along the continuum between about 1 and about 10. Thus, even if specific data points within the range, or even no data points within the range, are explicitly identified or refer to only a few specific, it is to be understood that the Applicant appreciates and understands that any and all data points within the range are to be considered to have been specified, and that the Applicant possessed knowledge of the entire range and all points within the range.

The term "formation" as utilized herein should be understood broadly. A formation includes any underground fluidly porous formation, and can include without limitation any oil, gas, condensate, mixed hydrocarbons, paraffin, kerogen, water, and/or CO₂ accepting or providing formations. A formation can be fluidly coupled to a wellbore, which may be an injector well, a producer well, a monitoring well and/or a fluid storage well. The wellbore may penetrate the formation vertically, horizontally, in a deviated orientation, or combinations of these. The formation may include any geology, including at least a sandstone, limestone, dolomite, shale, tar sand, and/or unconsolidated formation. The wellbore may be an individual wellbore and/or a part of a set of wellbores directionally deviated from a number of close proximity surface wellbores (e.g. off a pad or rig) or single initiating wellbore that divides into multiple wellbores below the surface.

The treatment fluids described herein should be understood broadly. In certain embodiments, an oilfield treatment fluid includes any fluid having utility in an oilfield type application, including a gas, oil, geothermal, or injector well. In certain embodiments, an oilfield treatment fluid includes any fluid having utility in any formation or wellbore described herein. In certain embodiments, an oilfield treatment fluid includes a matrix acidizing fluid, a wellbore cleanup fluid, a pickling fluid, a near wellbore damage cleanup fluid, a surfactant treatment fluid, an unviscosified fracture fluid (e.g. slick water fracture fluid), and/or any other fluid consistent with the fluids otherwise described herein. An oilfield treatment fluid may include any type of additive known in the art, which are not listed herein for purposes of clarity of the present description, but which may include at least friction reducers, corrosion inhibitors, surfactants and/or wetting agents, fluid diverting agents, particulates, acid retarders (except where otherwise provided herein), organic acids, chelating agents, energizing agents (e.g. CO₂ or N₂), gas generating agents, solvents, emulsifying agents, flowback control agents, resins, breakers, and/or non-polysaccharide based viscosifying agents.

The term "urea derivative" as used herein should be understood broadly. An example urea derivative includes any urea compound having at least one of the four nitrogen bonded hydrogens substituted. The substitution products may be anything, but include at least any hydrocarbon group, and may include substitutions on one or both of the urea nitrogens. Additionally or alternatively, substitutions may include cyclic groups (e.g. ethylene urea), aromatic groups, and/or nitrogen containing hydrocarbon groups. The inclusion of a urea derivative in the present disclosure should not be read as limiting to other urea derivatives which may be used as an alternative or addition.

Applicant has determined that the volume of water necessary to perform a well-stimulation treatment may be decreased substantially by preparing compositions that comprise water, urea and hydrochloric acid. Such compositions may realize liquid volume increases as high as 1540%.

In an aspect, embodiments relate to compositions comprising water, hydrochloric acid and urea, wherein the urea and water are present at a urea/water weight ratio between 0.8 and 12.0, and the hydrochloric acid and urea are present at a hydrochloric acid/urea molar ratio between 0.1 and 0.5.

In a further aspect, embodiments relate to methods for preparing a composition, comprising placing water into a container, adding urea powder to the water thereby forming a slurry, and introducing hydrochloric acid gas to the slurry until the powder is dissolved and the composition is present as a single phase. The urea and water are present at a urea/water weight ratio between 0.8 and 12.0, and the hydrochloric acid and urea are present at a hydrochloric acid/urea molar ratio between 0.1 and 0.5.

In yet a further aspect, embodiments relate to methods for treating a formation having a fracturing pressure in a subterranean well having a borehole. A composition is prepared that comprises water, hydrochloric acid and urea. The urea and water are present at a urea/water weight ratio between 0.8 and 12.0, and the hydrochloric acid and urea are present at a hydrochloric acid/urea molar ratio between 0.1 and 0.5. The composition is then placed into the well adjacent to the formation. The composition may be placed into the well at a pressure below the fracturing pressure (i.e., a matrix treatment). The composition may be placed into the well at a pressure above the fracturing pressure (i.e., a hydraulic fracturing treatment). The methods may further comprise allowing the composition to flow out of the formation and the well.

In yet a further aspect, embodiments relate to methods for reducing water volume in a treatment fluid for use in a subterranean well. A volume of water is placed into a container. Urea powder is added to the water, forming a slurry. Hydrochloric acid gas is introduced to the slurry until the powder is dissolved and a single-phase composition is formed. The resulting composition has a volume that is between 250% and 1540% larger than the water volume. The hydrochloric acid and urea are present at a urea/hydrochloric acid molar ratio between 0.1 and 0.5.

For all aspects, the compositions may further comprise a metal-organic framework (MOF) material. MOFs are made by linking inorganic and organic units by strong bonds. The flexibility with which the consituents' geometry, size and functionality can be varied has led to more than 20,000 different MOFs being reported and studied within the past decade. The organic units are ditopic or polytopic organic carboxylates (and other similar negatively charged molecules) which, when linked to metal-containing units, yield architecturally robust crystalling MOF structures with a typical porosity greater than 50% of the MOF crystal volume. The surface areas of such MOFs typically range from 1000 to 10,000 m²/g, thus exceeding those of traditional porous materials such as zeolites and carbons. In the context of this disclosure, including MOFs in the disclosed compositions improves dispersion and phase stability.

The metal may comprise Mg, Al, Ca, Sr, Ba, Sc, Y, Ti, Zr, Hf, V, Nb, Ta, Cr, Mo, W, Mn, Re, Fe, Ro, Os, Co, Rh, Ir, Ni, Pd, Pt, Cu, Ag, Au, Zn, Cd, Hg, Al, Ga, In, Ti, Si, Ge, Sn, Pb, As, Sb or Bi, or combinations thereof. The functional group may comprise - CO₂H, -CS₂, -NO₂, -B(OH)₂, -SO₃H, -Si(OH)₃, -Ge(OH)₃, -Sn(OH)₃, -Si(SH)₄,-Ge(SH)₄, -Sn(SH)₃, -PO₃H, -AsO₃H, -AsO₄H, -P(SH)₃, -As(SH)₃, -CH(RSH)₂,-C(RSH)₃, -CH(RNH₂)₂, -(RNH₂)₃, -CH(ROH)₂, -C(ROH)₃, -CH(RCN)₂, or -C(RCN)₃, or combinations thereof. R may be an alklyene group having 1, 2, 3, 4 or 5 carbon atoms, or an aryl group comprising 1 or 2 aromatic nuclei-such as, for example, two C6 rings which may be condensed and, independently of one another, may be suitably substituted by at least one substituent in each case and/or, independently of one another, may comprise in each case at least one hetero atom such as, for example, N, O or S or a combination thereof. In embodiments, functional groups in which the above-mentioned radical R is not present may be suitable, such as, for example -CH(SH)₂, - C(SH)₃, -CH(NH₂)₂, -C(NH₂)₃, -CH(OH)₂, -C(OH)₃, -CH(CN)₂ or -C(CN)₃. The MOF may be aluminum formate. The MOF may be present in the composition at a concentration between 1 wt% and 15 wt%.

For all aspects, the composition may further comprise a gelling agent. The gelling agent may comprise a viscoelastic surfactant (VES) or a water-soluble polymer, or both. The VES may be cationic, anionic or zwitterionic. The cationic VES may comprise quaternary ammonium salts of fatty acids. The anionic VES may comprise a salt derived from fatty acids with carbon chains longer than or equal to C₁₈. The zwitterionic VES may comprise betaines derived from fatty acids with carbon chains longer than or equal to C₁₈.

The water soluble polymer may comprise one or more polysaccharides including hydroxyethylcellulose, methylcellulose, ethylcellulose, hydroxypropylcellulose, guar gum, locust bean gum, tara gum, tamarind gum, karaya gum, gum arabic, ghatti gum, tragacanth gum, carrageenan, succinoglycan, hydroxypropyl guar, carboxymethyl hydroxyethyl guar, carboxyethylcellulose, carboxymethyl starch, xanthan gum, scleroglucan, dextrin and diutan. The water soluble polymer may also include polyacrylamide, polyvinyl alcohol, polyacrylic acid, a copolymer of 2-acrylamido-2 methyl propane sulfonic acid and acrylamide. The crosslinkable components may be present at concentrations between about 0.01 wt% and about 4.0 wt% based on the total weight of the treament fluid, or beween about 0.10 wt% and about 2.0 wt%.

For all aspects, the composition may have a density between about 1.22 g/cm³ and 1.45 g/cm³.

For all aspects, the total volume of the composition may be between 250% and 1540% larger than the volume of water in the composition.

For all aspects, Applicant envisions the optional use of urea derivatives. The urea derivatives may comprise 1,1-dimethylurea, 1,3-dimethylurea, 1,1-diethylurea, 1,3-diethylurea, 1,1-diallylurea, 1,3-diallylurea, 1,1-dipropylurea, 1,3-dipropylurea, 1,1-dibutylurea, 1,3-dibutylurea, 1,1,3,3-tetramethylurea, 1,1,3,3-tetraethylurea, 1,1,3,3-tetrapropylurea, 1,1,3,3-tetrabutylurea, ethyleneurea, propyleneurea, 1,3-dimethylpropyleneurea or 1,3-dimethylethyleneurea, or combinations thereof.

For all aspects, the composition may be prepared at a remote location and then transported to the wellsite. Alternatively, the composition may be prepared at the wellsite.

In some embodiments, the composition may be pumped from the wellbore into the formation, where the acid component may be spent by either reacting with consumable formation rock such as carbonate, or other debris in near wellbore regions. As a result, the excessive portion of urea may precipitate. The resulting solid urea may function as a chemical diverter for subsequent portions of the treatment.

In some embodiments, the composition in the form of a slurry (i.e. solid urea not fully dissolved) may be pumped down through the increasingly hotter wellbore. In the process, more urea is solvated in warmer fluid and the subsequent fluid volume expansion serves to boost the pressure against the formation, which in turn enhances the treatment.

The present disclosure may be further illustrated by the following examples. These examples do not limit the scope of the disclosure.

### EXAMPLES

### EXAMPLE 1

The disclosed HCl-urea-H₂O compositions were prepared in the laboratory. Each composition is described in Table. 1.

An HCI gas generating fluid was prepared by (in most cases) placing 23 g NaCl powder and 11 mL of 98% H₂SO₄ in a 250-mL Erlenmeyer flask. The flask was tightly sealed by a stopper through which a 0.25-in. (0.64-cm) tube ran from the flask to a large test tube containing an HCl gas absorbing fluid containing between 0.5mL and 3 mL H₂O, and between 2.4 and 12 g of urea powder.

Agitation of the flask caused the NaCl and H₂SO₄ to thoroughly combine and liberate nearly 100% dry HCl gas that flowed through the tube and bubbled through the water-urea slurry in the vessel. This process led to the dissolution of the urea beyond its water solubility. Without wishing to be held to any particular theory, Applicants believe an HCI-urea adduct formed via hydrogen bonding.

The HCI gas was allowed to pass through the water-urea slurry until there was no solid urea left. The resulting one-phase fluid was readily flowable and, depending upon the composition, the resulting volume increases varied between about 250% and 1540%.

At urea/H₂O weight ratios around 1.0, the volume increases were between about 250% and 280%, depending on whether urea was pre-blended with the H₂O. In some cases additional urea powder was added to the test tube. At urea/H₂O weight ratios between 1.2 and 3.2, the volume increases were between 330% and 500%. At urea/H2O weight ratios between 4.0 and 8.0, the volume increases were between 550% and 1000%. At urea/H2O weight ratios between 10 and 12, the final volume increases were between 1200% and 1540%; however, it was necessary to maintain the compositions at a temperature above 127°F (53°C) to maintain a single liquid phase.

In Test No. 8, 1g of an MOF (aluminum formate) was added to the HCI absorbing fluid. Test No. 7 featured the same amounts of H₂O and urea. The MOF may help entrap HCI in the liquid phase, thereby facilitating more effective binding with urea.

In Test No. 29, the HCl gas generating fluid consisted of 37% HCl. Heating 37% HCI causes the liberation of HCl gas.

During certain tests, CaCl₂ was added to the HCl gas generating fluid. The presence of CaCl₂ may drive the HCl gas generation reaction to its completion, especially toward the end of the process when the starting material concentration falls to a low level.

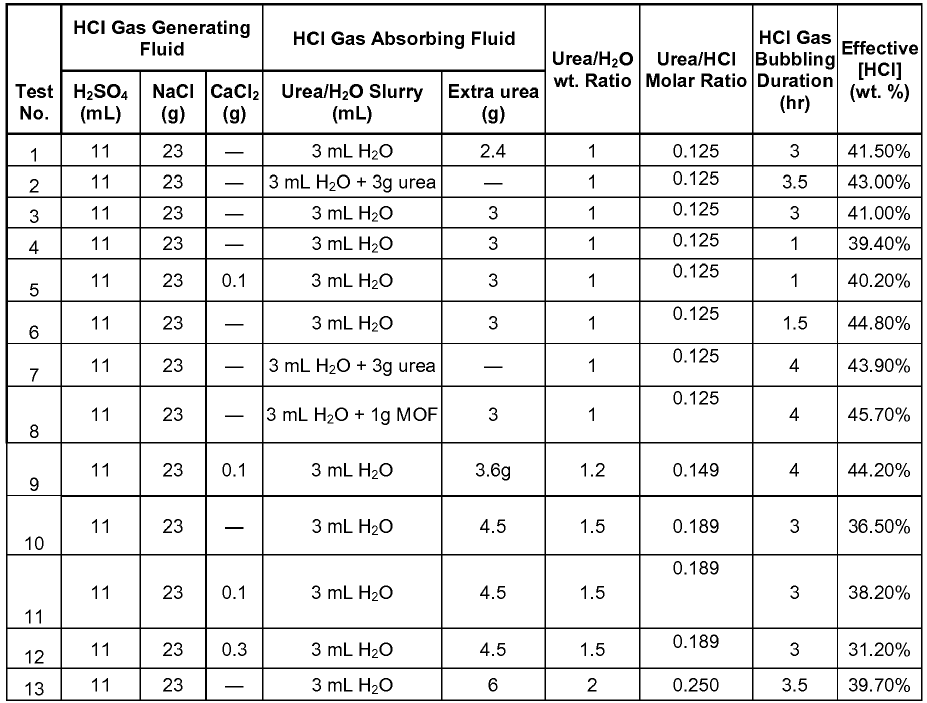

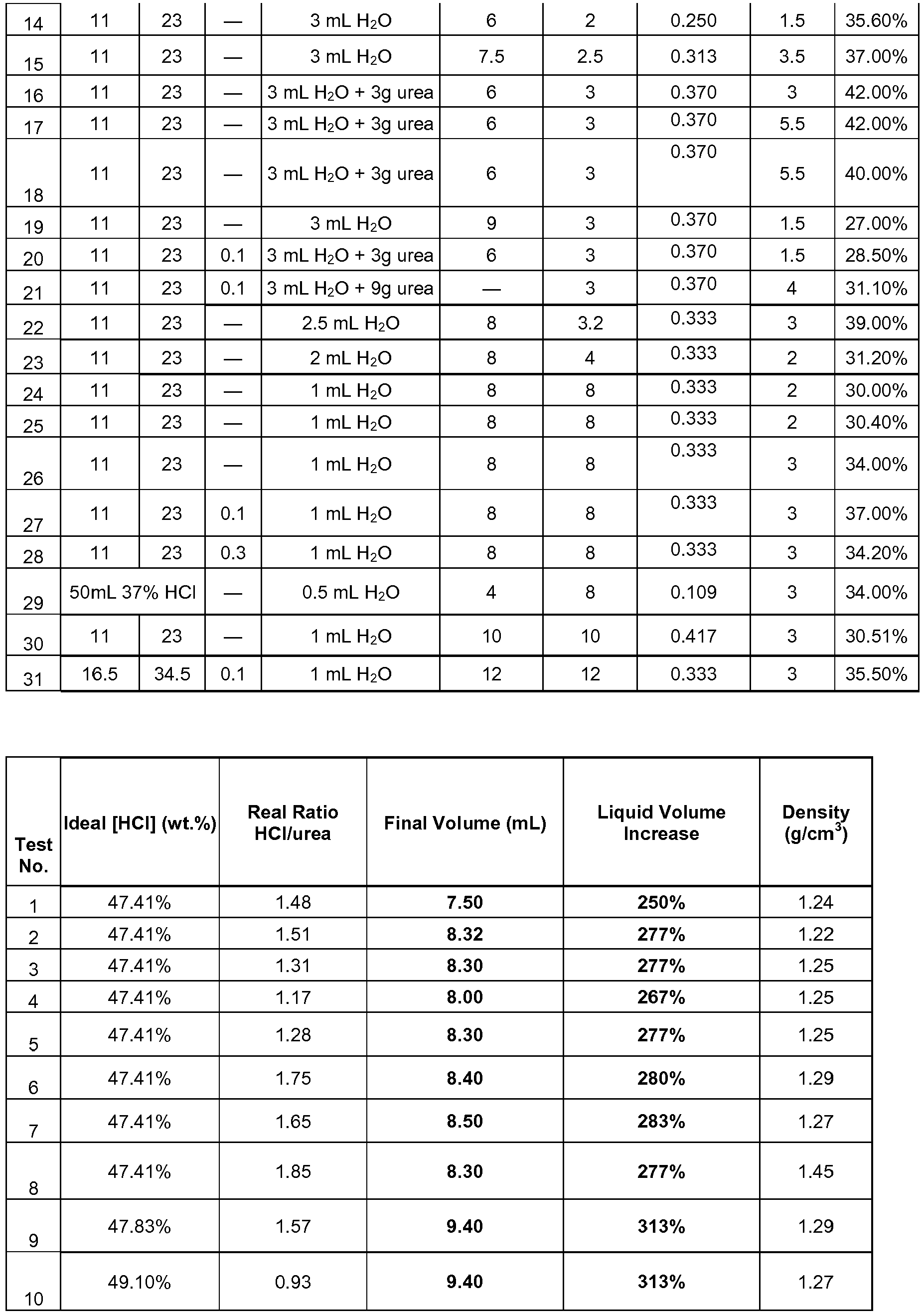

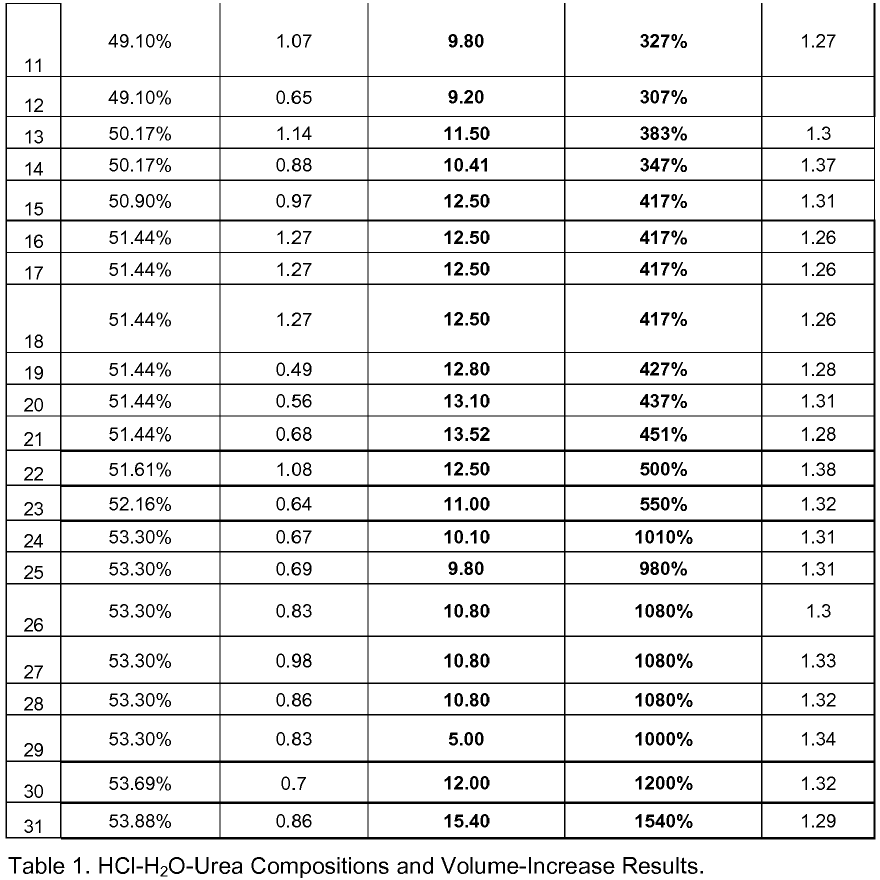

### EXAMPLE 2

The compressibility of one of the test fluids with a urea/H₂O weight ratio of 8 (Test No. 22) was compared with that of distilled H₂O at various pressures. The tests were conducted in a 20-mL stainless steel tube connected to an ISCO 500D pump in constant pressure mode. Volume changes were measured by the pump controller.

To maintain consistency, neither sample was deaerated prior to compression, which may explain why the largest amount of compression occurred between ambient pressure and 1000 psi (1 bar and 68.9 bar). Nevertheless, the tests unambiguously estabilishes that, within the uncertainty of the procedure, the compressibility of the urea rich fluid is analogous to that of distilled water. Thus, the urea rich fluid may serve as an alternative to water for the purposes of well-service operations such as drilling and reservoir stimulation.

**Table 2. Compressibility of a Urea-HCl-H₂O composition compared to that of distilled H₂O.**

| | **∼14.5 psi (1 bar)** | **1000 psi (68.9 bar)** | **2000 psi (138 bar)** | **3000 psi (207 bar)** | **4000 psi (276 bar)** | **5000 psi (345 bar)** |
|---|---|---|---|---|---|---|
| **Distilled H₂O** | 1.000 | 0.957 | 0.950 | 0.946 | 0.942 | 0.940 |
| **Urea-HCl-H₂**O | 1.000 | 0.959 | 0.955 | 0.949 | 0.945 | 0.941 |

While the disclosure has provided specific and detailed descriptions to various embodiments, the same is to be considered as illustrative and not restrictive in character. Although only a few example embodiments have been described in detail above, those skilled in the art will readily appreciate that many modifications are possible in the example embodiments without materially departing from this invention.

## Claims

1. A composition, comprising water, hydrochloric acid and urea; wherein:
(i) the urea and water are present at a urea/water weight ratio between 0.8 and 12.0;
(ii) the hydrochloric acid and urea are present at a urea/hydrochloric acid molar ratio between 0.1 and 0.5; and
(iii) wherein the composition and the water in the composition have volumes, the volume of the composition being between 250% and 1540% larger than the water volume.

2. The composition of claim 1, further comprising a metal-organic framework material.

3. The composition of claim 2, wherein the metal-organic framework material comprises:
(i) a metal comprising Mg, Al, Ca, Sr, Ba, Sc, Y, Ti, Zr, Hf, V, Nb, Ta, Cr, Mo, W, Mn, Re, Fe, Ro, Os, Co, Rh, Ir, Ni, Pd, Pt, Cu, Ag, Au, Zn, Cd, Hg, Al, Ga, In, Ti, Si, Ge, Sn, Pb, As, Sb or Bi, or combinations thereof; and
(ii) a functional group comprising -CO₂H, -CS₂, -NO₂, -B(OH)₂, -SO₃H, -Si(OH)₃, - Ge(OH)₃, -Sn(OH)₃, -Si(SH)₄, -Ge(SH)₄, -Sn(SH)₃, -PO₃H, -AsO₃H, -AsO₄H, - P(SH)₃, - AS(SH)₃, -CH(RSH)₂, -C(RSH)₃, -CH(RNH₂)₂, -(RNH₂K -CH(ROH)₂, - C(ROH)₃,-CH(RCN)₂, or -C(RCN)₃, or combinations thereof;
wherein R is an alkylene group having 1,2, 3, 4 or 5 carbon atoms, or an aryl group comprising 1 or 2 aromatic nuclei.

4. The composition of claim 1, further comprising a gelling agent.

5. The composition of claim 4, wherein the gelling agent comprises a viscoelastic surfactant or a water soluble polymer, or both.

6. The composition of claim 1, wherein the composition has a density between 1.22 and 1.45 g/cm³.

7. A method for preparing a composition according to any one of claims 1-6, comprising:
(i) placing water into a container;
(ii) adding urea powder to the water, forming a slurry; and
(iii) introducing hydrochloric acid gas to the slurry until the powder is dissolved and the composition is present as a single phase, wherein the composition and the water in the composition have volumes, the volume of the composition being between 250% and 1540% larger than the water volume.

8. The method of claim 7, wherein the composition further comprises a metal-organic framework material.

9. The method of claim 8, wherein the metal-organic framework material comprises:
(i) a metal comprising Mg, Al, Ca, Sr, Ba, Sc, Y, Ti, Zr, Hf, V, Nb, Ta, Cr, Mo, W, Mn, Re, Fe, Ro, Os, Co, Rh, Ir, Ni, Pd, Pt, Cu, Ag, Au, Zn, Cd, Hg, Al, Ga, In, Ti, Si, Ge, Sn, Pb, As, Sb or Bi, or combinations thereof; and
(ii) a functional group comprising -CO₂H, -CS₂, -NO₂, -B(OH)₂, -SO₃H, -Si(OH)₃,-Ge(OH)₃, -Sn(OH)₃, -Si(SH)₄, -Ge(SH)₄, -Sn(SH)₃, -PO₃H, -AsO₃H, -ASO₄H, - P(SH)₃,-As(SH)₃, -CH(RSH)₂, -C(RSH)₃, -CH(RNH₂)₂, -(RNH₂K -CH(ROH)₂, - C(ROH)₃,-CH(RCN)₂, or -C(RCN)₃, or combinations thereof;
wherein R is an alkylene group having 1,2, 3, 4 or 5 carbon atoms, or an aryl group comprising 1 or 2 aromatic nuclei.

10. The method of claim 7, wherein the composition has a density between 1.22 and 1.45 g/cm³.

11. A method for treating a formation having a fracturing pressure in a subterranean well having a wellbore, comprising:
(i) preparing a composition comprising water, hydrochloric acid and urea, wherein the urea and water are present at a urea/water weight ratio between 0.8 and 1.20, and the hydrochloric acid and urea are present at a urea/hydrochloric acid molar ratio between 0.1 and 0.5;
wherein the composition and the water in the composition have volumes, the volume of the composition being between 250% and 1540% larger than the water volume; and
(ii) placing the composition into the well adjacent to the formation.

12. The method of claim 11, wherein the composition further comprises a metal-organic framework material.

13. A method for reducing water volume in a treatment fluid for use in a subterranean well, comprising:
(i) placing water having a volume into a container;
(ii) adding urea powder to the water, forming a slurry; and
(iii) introducing hydrochloric acid gas to the slurry until the powder is dissolved and a single-phase composition is formed;
wherein the urea and water are present at a urea/water weight ratio between 0.8 and 12.0; and
wherein, the hydrochloric acid and urea are present at a urea/hydrochloric acid molar ratio between 0.1 and 0.5;
wherein, upon dissolution of the urea, the composition has a volume that is between 250% and 1540% larger than the water volume.

## Patentansprüche

1. Zusammensetzung, umfassend Wasser, Salzsäure und Harnstoff; wobei:
(i) der Harnstoff und das Wasser in einem Harnstoff/Wasser-Gewichtsverhältnis zwischen 0,8 und 12,0 vorliegen;
(ii) die Salzsäure und der Harnstoff in einem Harnstoff/Salzsäure-Molverhältnis zwischen 0,1 und 0,5 vorliegen; und
(iii) wobei die Zusammensetzung und das Wasser in der Zusammensetzung Volumen aufweisen, wobei das Volumen der Zusammensetzung zwischen 250 % und 1540 % größer als das Wasservolumen ist.

2. Zusammensetzung nach Anspruch 1, ferner umfassend ein metallorganisches Gerüstmaterial.

3. Zusammensetzung nach Anspruch 2, wobei das metallorganische Gerüstmaterial umfasst:
(i) ein Metall umfassend Mg, Al, Ca, Sr, Ba, Sc, Y, Ti, Zr, Hf, V, Nb, Ta, Cr, Mo, W, Mn, Re, Fe, Ro, Os, Co, Rh, Ir, Ni, Pd, Pt, Cu, Ag, Au, Zn, Cd, Hg, Al, Ga, In, Ti, Si, Ge, Sn, Pb, As, Sb oder Bi oder Kombinationen davon; und
(ii) eine funktionelle Gruppe umfassend -CO₂H, -CS₂, -NO₂, -B(OH)₂, -SO₃H, -Si(OH)₃, - Ge(OH)₃, -Sn(OH)₃, -Si(SH)₄, -Ge(SH)₄, -Sn(SH)₃, -PO₃H, -AsO₃H, -ASO₄H, - P(SH)₃, - As(SH)₃, -CH(RSH)₂, -C(RSH)₃, -CH(RNH₂)₂, -(RNH₂K -CH(ROH)₂, -C(ROH)₃, - CH(RCN)₂ oder -C(RCN)₃ oder Kombinationen davon;
wobei R eine Alkylengruppe mit 1, 2, 3, 4 oder 5 Kohlenstoffatomen oder eine 1 oder 2 aromatische Kerne umfassende Arylgruppe ist.

4. Zusammensetzung nach Anspruch 1, ferner umfassend ein Geliermittel.

5. Zusammensetzung nach Anspruch 4, wobei das Geliermittel ein viskoelastisches Tensid oder ein wasserlösliches Polymer oder beides umfasst.

6. Zusammensetzung nach Anspruch 1, wobei die Zusammensetzung eine Dichte zwischen 1,22 und 1,45 g/cm³ aufweist.

7. Verfahren zum Herstellen einer Zusammensetzung gemäß einem der Ansprüche 1-6, umfassend:
(i) Einbringen von Wasser in einen Behälter;
(ii) Zugeben von Harnstoffpulver in das Wasser unter Ausbildung einer Aufschlämmung; und
(iii) Einleiten von Salzsäuregas in die Aufschlämmung, bis das Pulver gelöst ist und die Zusammensetzung als einzelne Phase vorliegt, wobei die Zusammensetzung und das Wasser in der Zusammensetzung Volumen aufweisen, wobei das Volumen der Zusammensetzung zwischen 250 % und 1540 % größer als das Wasservolumen ist.

8. Verfahren nach Anspruch 7, wobei die Zusammensetzung ferner ein metallorganisches Gerüstmaterial umfasst.

9. Verfahren nach Anspruch 8, wobei das metallorganische Gerüstmaterial umfasst:
(i) ein Metall umfassend Mg, Al, Ca, Sr, Ba, Sc, Y, Ti, Zr, Hf, V, Nb, Ta, Cr, Mo, W, Mn, Re, Fe, Ro, Os, Co, Rh, Ir, Ni, Pd, Pt, Cu, Ag, Au, Zn, Cd, Hg, Al, Ga, In, Ti, Si, Ge, Sn, Pb, As, Sb oder Bi oder Kombinationen davon; und
(ii) eine funktionelle Gruppe umfassend -CO₂H, -CS₂, -NO₂, -B(OH)₂, -SO₃H, -Si(OH)₃, - Ge(OH)₃, -Sn(OH)₃, -Si(SH)₄, -Ge(SH)₄, -Sn(SH)₃, -PO₃H, -AsO₃H, -AsO₄H, -P(SH)₃, - As(SH)₃, -CH(RSH)₂, -C(RSH)₃, -CH(RNH₂)₂, -(RNH₂K -CH(ROH)₂, -C(ROH)₃,-CH(RCN)₂ oder -C(RCN)₃ oder Kombinationen davon;
wobei R eine Alkylengruppe mit 1, 2, 3, 4 oder 5 Kohlenstoffatomen oder eine 1 oder 2 aromatische Kerne umfassende Arylgruppe ist.

10. Verfahren nach Anspruch 7, wobei die Zusammensetzung eine Dichte zwischen 1,22 und 1,45 g/cm³ aufweist.

11. Verfahren zum Behandeln einer einen Brechdruck aufweisenden Formation in einer ein Bohrloch aufweisenden Untergrundbohrung, umfassend:
Herstellen einer Zusammensetzung umfassend Wasser, Salzsäure und Harnstoff, wobei der Harnstoff und das Wasser in einem Harnstoff/Wasser-Gewichtsverhältnis zwischen 0,8 und 1,20 vorliegen, und
die Salzsäure und der Harnstoff in einem Harnstoff/Salzsäure-Molverhältnis zwischen 0,1 und 0,5 vorliegen; wobei die Zusammensetzung und das Wasser in der Zusammensetzung Volumen aufweisen, wobei das Volumen der Zusammensetzung zwischen 250 % und 1540 % größer als das Wasservolumen ist; und
(ii) Einbringen der Zusammensetzung in die Bohrung angrenzend an die Formation.

12. Verfahren nach Anspruch 11, wobei die Zusammensetzung ferner ein metallorganisches Gerüstmaterial umfasst.

13. Verfahren zum Reduzieren eines Wasservolumens in einem Behandlungsfluid zur Verwendung in einer Untergrundbohrung, umfassend:
(i) Einbringen von ein Volumen aufweisendem Wasser in einen Behälter;
(ii) Zugeben von Harnstoffpulver in das Wasser unter Ausbildung einer Aufschlämmung; und
(iii) Einleiten von Salzsäuregas in die Aufschlämmung, bis das Pulver gelöst ist und eine einphasige Zusammensetzung ausgebildet ist;
wobei der Harnstoff und das Wasser in einem Harnstoff/Wasser-Gewichtsverhältnis zwischen 0,8 und 12,0 vorliegen; und
wobei die Salzsäure und der Harnstoff in einem Harnstoff/Salzsäure-Molverhältnis zwischen 0,1 und 0,5 vorliegen;
wobei nach dem Lösen des Harnstoffs die Zusammensetzung ein Volumen aufweist, das zwischen 250 % und 1540 % größer als das Wasservolumen ist.

## Revendications

1. Composition comprenant de l'eau, de l'acide chlorhydrique et de l'urée ; dans laquelle :
*(i)* l'urée et l'eau sont présentes dans un rapport pondéral urée/eau compris entre 0,8 et 12,0 ;
*(ii)* l'acide chlorhydrique et l'urée sont présents dans un rapport molaire urée/acide chlorhydrique entre 0,1 et 0,5 ; et
(iii) la composition et l'eau de la composition présentant des volumes, le volume de la composition étant entre 250 % et 1 540 % plus grand que le volume de l'eau.

2. Composition selon la revendication 1, comprenant en outre un matériau de structure métallo-organique.

3. Composition selon la revendication 2, dans laquelle le matériau de structure métallo-organique comprend :
(i) un métal comprenant Mg, Al, Ca, Sr, Ba, Sc, Y, Ti, Zr, Hf, V, Nb, Ta, Cr, Mo, W, Mn, Re, Fe, Ro, Os, Co, Rh, Ir, Ni, Pd, Pt, Cu, Ag, Au, Zn, Cd, Hg, Al, Ga, In, Ti, Si, Ge, Sn, Pb, As, Sb ou Bi, ou une combinaison de ceux-ci ; et
(ii) un groupe fonctionnel comprenant -C0₂H, -CS₂, -N0₂, -B(OH)₂, -S0₃H, -Si(OH)₃, - Ge(OH)₃, -Sn(OH)₃, -Si(SH)₄, -Ge(SH)₄, -Sn(SH)₃, -P0₃H, -As0₃H, -As0₄H, - P(SH)₃, - As(SH)₃, - CH(RSH)₂, -C(RSH)₃, -CH(RNH₂)₂, -(RNH₂K -CH(ROH)₂, - C(ROH)₃, - CH(RCN)₂, ou -C(RCN)₃, ou des combinaisons de ceux-ci ;
dans laquelle R est un groupe alkylène présentant 1,2, 3, 4 ou 5 atomes de carbone, ou un groupe aryle comprenant 1 ou 2 noyaux aromatiques.

4. Composition selon la revendication 1, comprenant en outre un agent gélifiant :

5. Composition selon la revendication 4, dans laquelle l'agent gélifiant comprend un agent tensioactif viscoélastique ou un polymère hydrosoluble, ou les deux.

6. Composition selon la revendication 1, dans laquelle la composition présente une masse volumique entre 1,22 et 1,45 g/cm³.

7. Procédé destiné à préparer une composition selon l'une quelconque des revendications 1 à 6, comprenant :
(i) le placement de l'eau dans un récipient ;
(ii) l'ajout de poudre d'urée à l'eau, formant une boue ; et
(iii) l'introduction de l'acide chlorhydrique gazeux dans la boue jusqu'à ce que la poudre soit dissoute et que la composition soit présente comme à phase unique, dans laquelle la composition et l'eau dans la composition présentent des volumes, le volume de la composition étant entre 250 % et 1 540 % plus grand que le volume de l'eau.

8. Procédé selon la revendication 7, dans lequel la composition comprend en outre un matériau de structure métallo-organique.

9. Procédé selon la revendication 8, dans lequel le matériau de structure métallo-organique comprend :
(i) un métal comprenant Mg, Al, Ca, Sr, Ba, Sc, Y, Ti, Zr, Hf, V, Nb, Ta, Cr, Mo, W, Mn, Re, Fe, Ro, Os, Co, Rh, Ir, Ni, Pd, Pt, Cu, Ag, Au, Zn, Cd, Hg, Al, Ga, In, Ti, Si, Ge, Sn, Pb, As, Sb ou Bi, ou une combinaison de ceux-ci ; et
(ii) un groupe fonctionnel comprenant -C0₂H, -CS₂, -N0₂, -B(OH)₂, -S0₃H, -Si(OH)₃, - Ge(OH)₃, -Sn(OH)₃, -Si(SH)₄, -Ge(SH)₄, -Sn(SH)₃, -P0₃H, -As0₃H, -As0₄H, - P(SH)₃, - As(SH)₃, - CH(RSH)₂, -C(RSH)₃, -CH(RNH₂)₂, -(RNH₂K -CH(ROH)₂, - C(ROH)₃, - CH(RCN)₂, ou -C(RCN)₃, ou des combinaisons de ceux-ci ;
dans laquelle R est un groupe alkylène présentant 1, 2, 3, 4 ou 5 atomes de carbone, ou un groupe aryle comprenant 1 ou 2 noyaux aromatiques.

10. Procédé selon la revendication 7, dans lequel la composition présente une masse volumique entre 1,22 et 1,45 g/cm³.

11. Procédé destiné au traitement d'une formation présentant une pression de fracturation dans un puits souterrain présentant un puits de forage, comprenant :
(i) la préparation d'une composition comprenant de l'eau, de l'acide chlorhydrique et de l'urée, dans laquelle l'urée et l'eau sont présentes selon un rapport pondéral urée/eau entre 0,8 et 1,20, et l'acide chlorhydrique et l'urée sont présents selon un rapport molaire urée/acide chlorhydrique entre 0,1 et 0,5 ;
dans lequel la composition et l'eau de la composition présentant des volumes, le volume de la composition étant entre 250 % et 1 540 % plus grand que le volume de l'eau ; et
(ii) en plaçant la composition dans le puits adjacent à la formation.

12. Procédé selon la revendication 11, dans lequel la composition comprend en outre un matériau de structure métallo-organique.

13. Procédé destiné à réduire le volume d'eau dans un fluide de traitement destiné à être utilisé dans un puits souterrain, comprenant :
(i) le placement de l'eau présentant un certain volume dans un récipient ;
(ii) l'ajout de poudre d'urée à l'eau, formant une boue ; et
(iii) l'introduction de l'acide chlorhydrique gazeux dans la boue jusqu'à ce que la poudre soit dissoute et qu'une composition à phase unique soit formée ;
dans lequel l'urée et l'eau sont présents selon un rapport pondéral urée/eau entre 0,8 et 12,0 ; et
dans lequel, l'acide chlorhydrique et l'urée sont présents selon un rapport molaire urée/acide chlorhydrique entre 0,1 et 0,5 ;
dans lequel, sous l'effet de la dissolution de l'urée, la composition présente un volume qui est entre 250 % et 1 540 % plus grand que le volume de l'eau.
